Europäisches Patentamt

European Patent Office

Office européen des brevets

(11) Publication number: 0 359 086
A2

# EUROPEAN PATENT APPLICATION

(21) Application number: 89116324.8

(22) Date of filing: 04.09.89

(51) Int. Cl.⁵: G06F 13/40 , H05K 7/14

(30) Priority: 16.09.88 US 245854

(43) Date of publication of application:
21.03.90 Bulletin 90/12

(84) Designated Contracting States:
AT BE CH DE ES FR GB GR IT LI LU NL SE

(71) Applicant: Siemens Aktiengesellschaft
Wittelsbacherplatz 2
D-8000 München 2(DE)

(72) Inventor: Klein, Klaus
Im Kirchbühl 3
D-7512 Rheinstetten 1(DE)
Inventor: Kropp, Peter
Berliner Strasse 54
D-7520 Bruchsal(DE)
Inventor: Neugebauer, Manfred
Theresienstrasse 7
D-8501 Ochenbruck(DE)
Inventor: Schmitt, Reinhard
Horstring 22
D-6740 Landau(DE)
Inventor: Weidmann, Rolf
Hinter den Gärten 13
D-6653 Blieskastel(DE)

(54) Distributor arrangement for input/output lines in a data processing installation.

(57) Each input/output line is provided with a driver
module coupled to its respective input/output pro-
cessor, an input/output subsystem circuitboard on
which several subassemblies with distributor modules are pluggable, at least one pluggable bus connection between a driver module and an input/output
subsystem circuitboard, and a number of plug con-
nections on the distributor modules for coupling the
peripheral equipment tc the data processing installa-
tion via the respective input/output lines.

FIG 1

# DISTRIBUTOR ARRANGEMENT FOR INPUT/OUTPUT LINES IN A DATA PROCESSING INSTALLATION

Background of the Invention

The invention relates to a distributor arrangement for input output lines in a data processing installation with at least one input/output processor which is connected with the system bus of the data processing installation, and with pluggable subassemblies on which the input/output processors are arranged and by which the input/output lines are connectable to the system bus.

In "rtp - Regelungstechnische Praxis", vol. 23, 1981, No. 10, pages S27 - S28, "Bussysteme, 2. Allgemeine Grundlagen", there is disclosed an arrangement by which peripheral equipment, such as printers, external drives, input terminals, or measuring transducers whose signals are to be processed, can be coupled to the central subassemblies of a data processing installation. Since the various peripheral equipment units generally have different buses or process different bus protocols, a plurality of different input output bus lines are needed, and it is necessary that bus connections (for instance IEC bus) for certain standardized peripheral equipment be available in large numbers.

There is a need for a distributor arrangement of the above-described type which permits universal distribution of the input/output lines and which is easy to disassemble and to expand.

Summary of The Invention

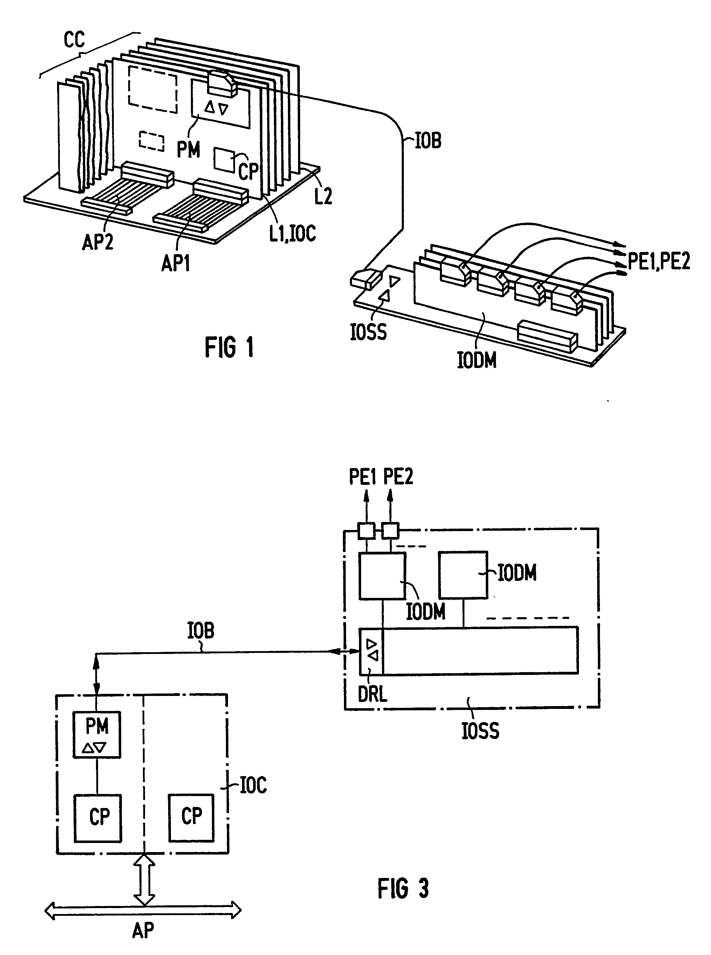

In a novel arrangement according to the present invention, the distributor arrangement of the above-described type is provided with a driver module (Personality Module) coupled to the respective input/output processor, an input/output subsystem circuitboard on which several subassemblies with distributor modules are pluggable, at least one pluggable bus connection between a driver module and an input/output subsystem circuitboard, and with a number of plug carrying input/output processors CP. Figure 1 illustrates only some few components which are useful for understanding the operation of the embodiment of the invention. Circuit board L1 here constitutes an input/output subassembly IOC with which connections to peripheral equipments can be established via the input/output processors CP. At the upper end of input/output subassembly there are input/output bus IOB plug devices for driver modules PM which can be placed on components of the input/output subassembly by the so-called piggyback method. These driver modules represent in each instance a connection element of data processing systems to a certain bus system or, respectively, to a certain transmission protocol on the input output lines.

By way of a pluggable input/output bus IOB connection, an input/output subsystem IOSS is connectable. In the embodiment shown, four distributor modules IODM are pluggable on this subsystem IOSS. From these distributor modules IOD, the input output lines for peripheral equipment PE1, PE2 to be connected can be coupled via appropriate plug connections. With the embodiment illustrated it is possible, for example, to make available from a driver module on the input/output subassembly IOC 16 connections for peripheral equipment, of which in each instance four have the same or also different electrical characteristics, depending on the type of interface.

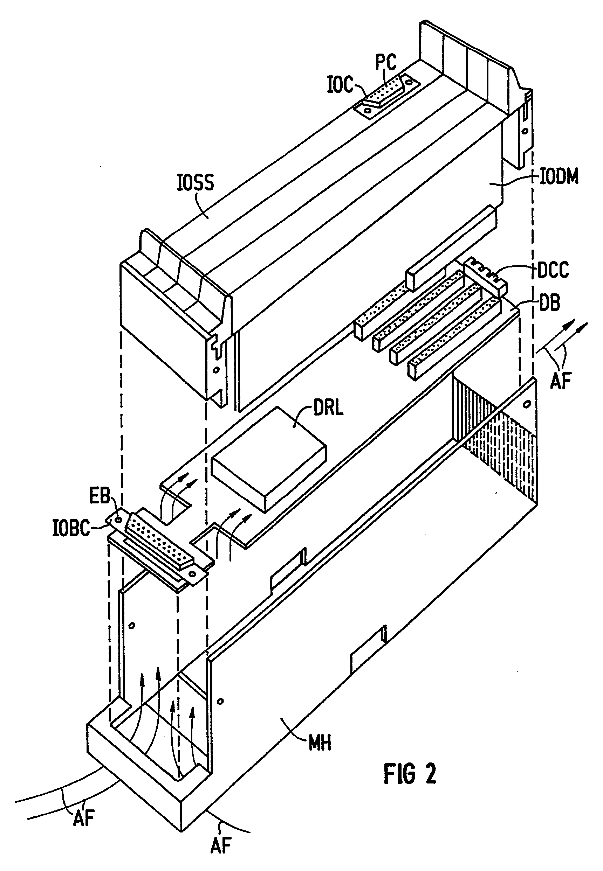

Figure 2 shows the mechanical setup of an embodiment of the input/output subsystem IOSS which has a metal housing MH. The base of the input output subsystem IOSS is a distributor circuit board DB, which at one end comprises the plug IOBC for the input/output bus IOB coming from the central system. Also arranged on the distributor circuit board are a driver and receiver logic DRL, a d-c voltage plug DCC, and the plug arrangements for the input/output distributor modules IODM. The distributor modules IODM are thus pluggable into the metal housing MH and make available at their connections on the distributor modules for coupling the peripheral equipment to the data processing installation via the respective input/output lines. When this distributor arrangement is used in a data processing installation, especially in technology and science, a plurality of identical or different coupling options of peripheral equipment units is possible via the required interfaces. Through the easily exchangeable arrangement of driver modules (Personality Modules) of the invention, that data processing installation can be adapted quickly to the requirements. With a Non-Stop design of the data processing installation which has a plurality of input/output processors, this can take place also without interruption of the operation.

Brief description of the Drawings

The invention will be explained with reference to the figures, with

Figure 1 showing a sketch of pluggable distributor subassemblies for the input/output lines in accordance with one embodiment of the invention;

Figure 2, a representation of the mechanical setup of a subsystem for the distributor subassemblies of Fig. 1; and

Figure 3, a block diagram of the electronic subassemblies of the distributor arrangement of Fig. 1.

Detailed Description

In Figure 1 there is illustrated a subassembly support CC, on which there are two system buses AP1 and AP2. Connected to the system buses AP1 and AP2 by corresponding plug devices are, in the illustrated embodiment, circuit boards L1, L2, with circuit board L1 front face the plugs for the bus connections to the peripheral equipment. In this illustration are indicated further the air streams AF for the cooling air, which is to spread evenly around the distributor modules IODM.

Figure 3 shows an electrical block diagram of the subassemblies used in the distributor arrangement for the input/output lines. To the system bus AP shown there is connected the input/output subassembly IOC which contains the input/output processor CP and also carries the plug device for the driver modules PM placed on piggyback. From these driver modules PM there is connected via the input/output bus connection IOB the input/output subsystem IOSS, which also correspondingly contains the driver or, respectively, receiver components. In the illustrated input/output subsystem IOSS there are shown here, for example, two distributor modules IODM which comprise the plug arrangements for the peripheral equipments PE1 and PE2, respectively, connected to the input/output lines.

**Claims**

1. A distributor arrangement for input/output lines in a data processing installation, comprising:
at least one input/output processor which is connected with a system bus of the data processing installation;
at least one pluggable subassembly on which the input/output processor is arranged and by which the input/output lines are connectable with the system bus;
a first driver module coupled to the respective input/output processor;
an input/output subsystem circuitboard on which several subassemblies with distributor modules are pluggable;
at least one pluggable bus connection between a driver module and the input/output subsystem circuitboard; and
a number of plug connectors on the distributor modules for the coupling of peripheral equipment to the data processing installation via the respective input/output bus connections.

2. The distributor arrangement according to claim 1, wherein at least one of the driver modules which supports a given transmission protocol for the distributor modules is connected via the pluggable bus connection.

3. The distributor arrangement according to claim 1, wherein two driver modules on an input/output subassembly comprise two redundant input/output processors.

4. The distributor arrangement according to claim 1, comprising four of the plug connectors on each distributor module.

5. The distributor arrangement according to claim 1, comprising:
a first plug-on device with which the driver modules can be plugged onto the components, the plug-on device comprising a plug socket on the input/output subassembly.

6. The distributor arrangement according to claim 5, comprising:
a second plug-on device with which the distributor modules can be plugged onto the components, the plug-on device comprising a plug socket on the input/output subassembly.

P 7442 E

FIG 1

FIG 3

' 7442 E

FIG 2